# EUROPEAN PATENT APPLICATION

(11) **EP 1 054 539 A2**
(43) Date of publication of application: **22.11.2000**
(21) Application number: 00110640.0
(22) Date of filing: 18.05.2000
(51) Int. Cl.: H04L 27/26, H04L 1/20

(54) **Method and apparatus for improving performance of a splitterless asymmetric digital subscriber line (ADSL)**

(30) Priority: 18.05.1999 US 314243
(71) Applicant: Orckit Communications Ltd., Tel Aviv 67488 (IL)
(72) Inventor: Verbin, Rami, Ramat Aviv, Tel-Aviv 69122 (IL); Baum, Dudi, Ramat-Gan 52463 (IL); Shusterman, Eli, Kfar-Saba (IL); Sharfer, Ilan, Rishon-Le-Zion (IL)
(74) Representative: Grünecker, Kinkeldey, Stockmair & Schwanhäusser Anwaltssozietät

(57) **Abstract**

The present invention provides a method and apparatus for improving the performance of splitterless ADSL systems. The present invention provides a uniform technique for adapting an ADSL system to any of these situations. The invention provides a graduated approach to handling anomalies that may be caused by incompatible telephone equipment. One embodiment of the invention attempts to correct anomalous situations without having to interrupt the data communication. If more information is needed, a very brief channel echo measurement is conducted. Only if the problem cannot be resolved at this point is retraining of the modem performed. This approach greatly minimizes interruption of data communication and reduction of bandwidth. Another embodiment of the invention reduces the transmitted signal level to its lowest practical value to minimize interference with telephone equipment. Multiple levels of signal reduction are available, and user input may be obtained to optimize the transmit signal level.

## Description

### FIELD OF THE INVENTION

The present invention relates generally to voice and data communications over digital subscriber lines and, more particularly, to a method and apparatus for improving the performance of a splitterless Asymmetric Digital Subscriber Line (ADSL).

### BACKGROUND OF THE INVENTION

While telephone lines are useful for data communications using modems, the data rates that can be achieved over ordinary telephone lines are rather limited. Attempts have been made to re-engineer existing telephone lines for digital data communications. These include Integrated Services Digital Network (ISDN) and, more recently, Digital Subscriber Lines (DSLs). Since most computer users tend to receive more data than they send, Asymmetric Digital Subscriber Lines (ADSLs) having different bandwidths for reception and transmission have been favored over regular DSLs.

In order to maximize the utility of the existing copper cable plant, ADSL has been implemented to allow an ordinary POTS ("plain old telephone service") communication channel to coexist with the ADSL data communication capacity. However, originally, ADSL required a POTS splitter to be installed at the point where the ADSL enters a business or residence. The POTS splitter separated the POTS communication channel from the ADSL data communication channel allowing ordinary telephone instruments to receive/transmit over the POTS communication channel without the need for any sort of adapters.

Unfortunately, a certain amount of specialized knowledge is required in order to properly install the POTS splitter. Thus, a version of ADSL known as splitterless ADSL or G.Lite was developed. Splitterless ADSL avoids the need for a POTS splitter at the customer premises. However, since there is no splitter to separate the ADSL data from the POTS voice signals, the ADSL signal is present at telephone jacks throughout the subscriber's home or business. This ADSL signal may become corrupted if incompatible telephone instruments are plugged into the telephone jacks.

The G.Lite variant of ADSL has also been referred to as universal ADSL, by the Universal ADSL Work Group (UAWG). One of the goals of UAWG is to develop an ADSL technology that allows simple modem installation by the end user. This refers to G.Lite's promise to allow telephone companies to provision ADSL and allow customers to set up G.Lite DSL connections on their own - without the delay and expense of a telephone company service call.

The standard for G.Lite arises from a series of technical requirements which were approved at the October, 1998, meeting of the ITU (International Telecommunications Union --a group headquartered in Geneva, Switzerland). The ITU's Study Group 15 Q4 called the technology G.Lite. The ANSI (American National Standards Institute) T1/E1.4 committee and the ADSL Forum (an industry group) call it splitterless ADSL or Lite ADSL.

The original installation concept in ADSL required a centralized POTS splitter to be installed on the telephone line usually at the NID (network interface device). The purpose of this POTS splitter is to split the frequency range into two isolated bands - a telephone (POTS) band and an ADSL band.

The implications of the above installation concept are that installation of the POTS splitter is non-trivial and that there is a need to install new wiring from the NID to the ADSL modem. As a result, installation of ADSL will not be readily installed by end users. It will require, in most cases, the assistance of the telephone company.

The G.Lite modem uses the existing home wiring (used today for POTS), so the installation becomes simple. G.Lite and POTS operate together on the same internal home wiring system, allowing the customer to plug both a telephone and a modem into a standard wall telephone outlet.

When a phone goes off-hook, noise is generated from the phone in the same frequency range as the ADSL signal (because of non-linear effects). Furthermore, the impedance of an off-hook phone may be so low that it essentially shunts the strength of the ADSL signal. The increase of noise and decrease of signal will usually cause errors in the ADSL signal, which will require a re-start process in order to re-sync. The opposite can happen as well. The ADSL signal can sometimes be heard as an annoying sound in the telephone.

A small lowpass filter (inline filter) may be installed in series with the telephone apparatus to filter out the interference between the data signals and the voice signals. The inline filter behaves as a distributed POTS splitter, i.e., instead of installing a splitter at the NID, as with splitter-based ADSL modems, the customer may instead install an inline filter on the most problematic phones, or even on all phones.

When the inline filter (low-pass filter) is installed between the wall jack and the telephone, it isolates the phone from the modem. The phone will not influence the modem and the ADSL transmit signals will be filtered out before entering the phone.

In order to cope with the disruptive interference of phones on the ADSL signal and the annoying interference of ADSL signals into a telephone when an inline filter is not used, the modem must retrain when one of the phones goes off-hook. This fast retrain takes about one or two seconds and allows the modem to adapt itself to the new condition.

During the fast retrain, the service stops and is reestablished afterwards. This interruption is undesirable and is considered to be one of the main disadvantages of G.Lite. Putting the phone back on-hook requires another fast retrain routine since the off-hook settings of the modem are not optimal for the on-hook case.

G.Lite modem installation involves the use of at least one inline filter in the majority of homes. Inline filtering may be required in order to make G.Lite work at fast bit rates or in some cases to allow it to work at all.

A significant percentage of corded phones require an inline filter in order to meet minimum standards for audible interference in the off-hook condition. However, some cordless phones do not require an inline filter and behave as if an inline filter is already installed inside. In both cases (phones with inline filters and some cordless phones), fast retain for the modem is not always a necessity when phones go off-hook or return to on-hook.

However, the presence of certain telephones requires a modem to retrain when the telephones transition between on-hook and off-hook states. Thus, a technique is needed to distinguish efficiently between situations where retraining is needed and where it is not.

### SUMMARY OF THE INVENTION

The present invention provides a method and apparatus for improving the performance of splitterless ADSL systems. While ideally users would install lowpass filters on all telephones when using splitterless ADSL, it can be expected that users will neglect to do so in some cases. Some telephones, when switching between on-hook and off-hook states, will cause interference with ADSL data, while others will not. The present invention provides a uniform technique for adapting an ADSL system to any of these situations. The invention provides a graduated approach to handling anomalies that may be caused by incompatible telephone equipment.

One embodiment of the invention ensures robust detection of the phone's state, i.e., on hook or off hook. This reliable detection is a key functionality for any implementation of a splitterless DSL.

One embodiment of the invention attempts to detect anomalous situations without having to interrupt the data communication. If more information is needed, a very brief channel echo measurement is conducted. Only if the problem cannot be resolved at this point is retraining of the modem performed. This approach greatly minimizes interruption of data communication and reduction of data rates.

One embodiment of the invention reduces the transmitted signal level to its lowest practical value to minimize interference with telephone equipment. This minimization relates separately for on hook and off hook cases. Multiple levels of signal reduction are available, and user input may be obtained to optimize the transmit signal level.

One embodiment of the invention provides a method for improving performance of a digital subscriber line comprising the steps of determining a status of a telephone hookswitch, determining whether retraining is indicated, and determining whether power level adjustment is indicated. Examples of the status of the telephone hookswitch include an on hook state and an off hook state. Other events relevant to the status of the telephone hookswitch include the transition from the on hook state to the off hook state and the transition from the off hook state to the on hook state. This method may further include the steps of initiating a retraining routine and adjusting a power level. The invention may be practiced in a manner such that the step of determining whether the retraining is indicated occurs in response to the step of determining the status of the telephone hookswitch.

The step of determining the status of the telephone hookswitch may further comprise the step of determining whether the status of the telephone hookswitch has changed. Additionally, the steps of determining whether a different modem configuration profile is appropriate and selecting the different modem configuration profile may be performed.

One embodiment of the invention involves determining whether an inline filter is installed. This determination may occur when the status of the telephone hookswitch is off hook. This technique may include the steps of initiating a retraining routine and adjusting a power level. The step of determining whether the retraining is indicated may occur in response to the step of determining whether the inline filter is installed. Additional steps of determining whether a different modem configuration profile is appropriate and selecting the different modem configuration profile may also be performed.

One embodiment of the invention provides a method for determining whether modem retraining is indicated. This method includes the steps of determining a status of a telephone hookswitch and performing an echo channel measurement procedure. The step of determining a channel transfer function may also be performed. The step of determining the status of the telephone hookswitch further may include steps of determining whether the status of the telephone hookswitch has changed, and the step of determining the channel transfer function may further comprise determining whether the channel transfer function has changed.

The step of performing the echo channel measurement procedure may further comprise the steps of scheduling a time frame for performing the echo channel measurement procedure, acknowledging the step of scheduling, discontinuing transmission of data by a first modem, initiating transmission of an echo testing signal by a second modem, and performing a measurement of the echo testing signal. The method may also include the step of determining whether the measurement of the echo testing signal indicates a need for retraining. The invention may be practiced such that the first modem and the second modem resume normal communication after the step of performing measurement of the echo testing signal.

One embodiment of the invention provides a method for determining whether retraining is indicated. This method includes the step of obtaining line quality information comprising a hookswitch status, a channel transfer function, and an echo measurement and the step of determining whether the line quality information indicates retraining is needed. The step of obtaining line quality information can include obtaining an error rate, a noise margin, and a change in noise margin.

One embodiment of the invention provides a method for reducing distortion on a digital subscriber line. The method includes the following steps: performing a channel loss measurement on the digital subscriber line, determining a minimum required signal level, and adjusting a signal level on the digital subscriber line to remain above the minimum required signal level. The step of adjusting the signal level may occur in response to a telephone hookswitch changing from being in an on-hook state to being in an off-hook state. The step of adjusting the signal level may occur according to a user selection from among multiple signal level settings.

One embodiment of the invention provides a method for estimating telephone hookswitch status. The method includes the following steps: periodically initiating detection routines, determining whether a change in modem performance has occurred, and characterizing the change in modem performance as an indication of change in the telephone hookswitch status.

One embodiment of the invention provides a method for controlling a modem comprising the steps of detecting a hookswitch state and a presence of an inline filter, and optimizing modem parameters based on the hookswitch state and the presence of the inline filter. The step of retraining the modem may also be performed. The step of initializing the modem may also be performed.

One embodiment of the invention provides a method for determining a need for retraining a modem comprising the steps of determining a hookswitch state, obtaining line quality information, determining if the line quality information suggests a need for retraining, determining if a channel response has changed, and checking an echo response.

One embodiment of the invention provides a method for controlling a transmit power level of a modem comprising the following steps: measuring a noise margin, counting errors during a time interval, and decreasing the transmit power level.

One embodiment of the invention provides a method for controlling a modem transmission while telephone equipment is in an off-hook state comprising the steps of determining if the modem transmission is allowed during the off-hook state and setting a minimum power per carrier to support a minimum pre-defined data rate with a minimum pre-defined noise margin. This method may also include the steps of setting a power level for the modem transmission to zero and waiting for an on-hook transition. The step of saving the minimum power per carrier in a storage memory may also be performed. The step of initializing a modem may also be performed. The step of determining if the modem transmission is allowed during the off-hook state may further comprise the step of receiving a user indication as to whether the modem transmission is allowed during the off-hook state.

### BRIEF DESCRIPTION OF THE DRAWINGS

FIG. 1 is a block diagram illustrating an embodiment of the present invention with off hook detection occurring at the ADSL Transceiver Unit-CO side (ATUC).
FIG. 2 is a block diagram illustrating an embodiment of the invention with off-hook detection occurring at the ADSL Transceiver Unit-Remote side (ATUR).
FIG. 3 is a flow diagram illustrating a process for controlling retraining or adaptive attenuation according to one embodiment of the invention.
FIGS. 4A and 4B are a flow diagram illustrating a process for determining if retraining is needed and, if necessary, performing retraining according to one embodiment of the invention.
FIG. 5 is a flow diagram illustrating a process for determining if retraining is needed and, if necessary, performing retraining according to one embodiment of the invention.
FIG. 6 is a flow diagram illustrating a process for adaptive attenuation according to one embodiment of the invention.
FIG. 7 is a flow diagram illustrating a process for adaptive attenuation according to one embodiment of the invention.
FIG. 8 is a flow diagram illustrating a process for user-selected adaptive attenuation according to one embodiment of the invention.
FIG. 9 is a flow diagram illustrating a process for detecting the state of a telephone hookswitch according to one embodiment of the invention.
FIG. 10 is a flow diagram illustrating a process for setting the transmit power during the off hook state when an ILF is not installed.

### DETAILED DESCRIPTION OF THE INVENTION

The present invention is directed to a method and apparatus for improving the performance of a splitterless ADSL system. The invention provides benefits for both improved data communications and improved voice communications. The procedure for managing decisions to retrain the ADSL modems reduces the amount of time the ADSL is unavailable for data communications. According to the present invention, an adaptive attenuation technique reduces the likelihood that transmitted ADSL data will interfere with telephone conversations conducted over the POTS feature of the ADSL. For the on hook case, the adaptive attenuation technique decreases the non-linear behavior of the phone, thus improving the modem's performance.

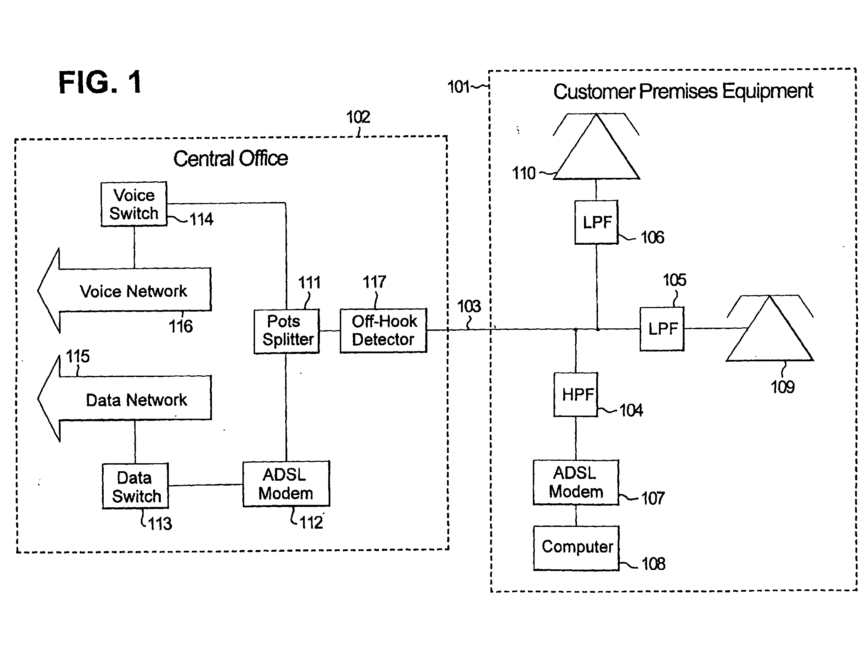

FIG. 1 is a block diagram illustrating an embodiment of the present invention with off-hook detection occurring at the ADSL Transceiver Unit-CO side (ATUC). Customer premises equipment (CPE) 101 is coupled to central office (CO) 102 via digital subscriber line (DSL) 103. CPE 101 includes highpass filter 104, lowpass filters 105 and 106, ADSL modem 107, computer 108, and telephone instruments 109 and 110. Computer 108 is coupled to ADSL modem 107, which is coupled to highpass filter 104, which is coupled to DSL 103. Telephone instrument 109 is coupled to lowpass filter 105, which is coupled to DSL 103. Telephone instrument 110 is coupled to lowpass filter 106, which is coupled to DSL 103.

CO 102 includes off-hook detector 117, POTS ("plain old telephone service") splitter 111, ADSL modem 112, data switch 113, voice switch 114, data network 115, and voice network 116. DSL 103 is coupled to off-hook detector 117, which is coupled to POTS splitter 111. Off-hook detector 117 also provides an output to ADSL modem 112. POTS splitter 111 is coupled to voice switch 114 and to ADSL modem 112. ADSL modem 112 is coupled to data switch 113. Voice switch 114 is coupled to voice network 116. Data switch 113 is coupled to data network 115.

Off-hook detector 117 monitors the electrical characteristics of DSL 103 to determine the status of the hookswitches of telephone instruments 109 and 110. Off-hook detector 117 can detect if either or both of telephone instruments 109 and 110 go to an off-hook state. For example, off-hook detector 117 can monitor the voltage across DSL 103 or the current through DSL 103 to determine the status of the hookswitches. Since closure of a hookswitch causes considerable current to flow through the subscriber loop, current through DSL 103 can be readily detected. For example, a low-value resistor may be placed in series with DSL 103 and the voltage across the resistor measured to determine current flow. Alternatively, current flow may be detected using other devices, such as optocouplers or mechanical sensors. Since subscriber loops typically have a high source impedance, substantial voltage drops tend to occur as current through the loop increases. For this reason, current flow can be detected by simply measuring the voltage across DSL 103 without the need to insert additional components in the current path.

Since this embodiment involves detection of an off-hook condition using an off- hook detector at CO 102, procedures for accommodating the off-hook condition are initiated at CO 102. If off-hook detector 117 detects a change of hookswitch status, it passes a signal to ADSL modem 112. ADSL modem 112 initiates testing to determine if a modem retraining routine is indicated. If so, it communicates this information to ADSL modem 107 at CPE 101 via DSL 103. ADSL modem 112 and ADSL modem 107 then determine and implement any required retraining routine and reestablish an efficient communications link.

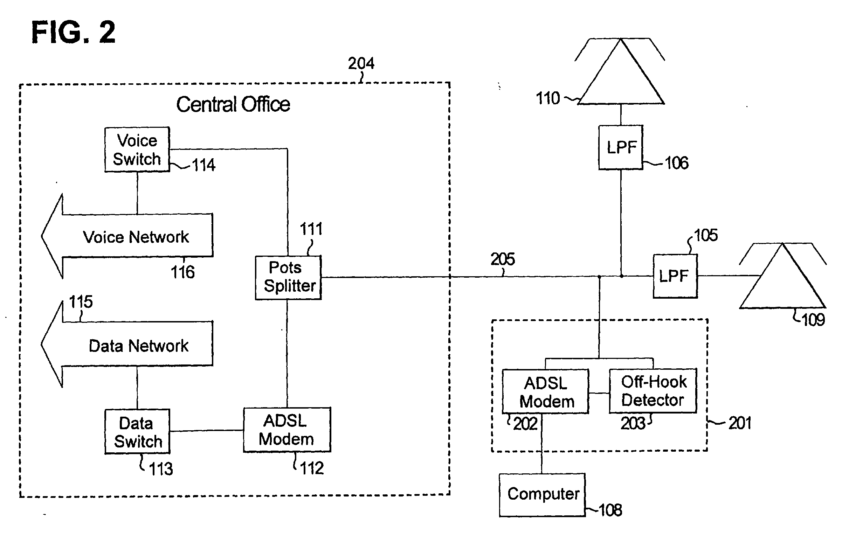

FIG. 2 is a block diagram illustrating an embodiment of the invention with off hook detection occurring at the ADSL Transceiver Unit-Remote side (ATUR). CO 204 includes POTS splitter 111, ADSL modem 112, data switch 113, voice switch 114, data network 115, and voice network 116. DSL 205 is coupled to POTS splitter 111. POTS splitter 111 is coupled to ADSL modem 112 and voice switch 114. ADSL modem 112 is coupled to data switch 113. Data switch 113 is coupled to data network 115. Voice switch 114 is coupled to voice network 116.

At the customer premises side, computer 108 is coupled to ADSL interface 201. ADSL interface 201 includes ADSL modem 202 and off-hook detector 203. ADSL modem 202 is coupled to off-hook detector 203. ADSL modem 202 and off-hook detector 203 are coupled to DSL 205. Telephone instrument 109 is coupled to lowpass filter 105, which is coupled to DSL 205. Telephone instrument 110 is coupled to lowpass filter 106, which is coupled to DSL 205.

Off- hook detector 203 is coupled to DSL 205 and is configured to detect the status of any hookswitch associated with any telephone instrument on DSL 205, for example telephone instruments 109 and 110. Off-hook detector 203 may be configured in any manner that allows it to detect the electrical characteristics of DSL 205. As an alternative, off-hook detector 203 may be interposed between ADSL modem 202 and DSL 205.

Since off-hook detector 203 is associated with ADSL modem 202 of the CPE, requests for corrective action arising from the sensing of hookswitch events will be initiated by ADSL modem 202 of the CPE. If appropriate, ADSL modem 202 transmits a request via DSL 205 to ADSL modem 112 to arrange whatever action may be indicated, for example, performing an echo channel measurement or initiating a request for retraining.

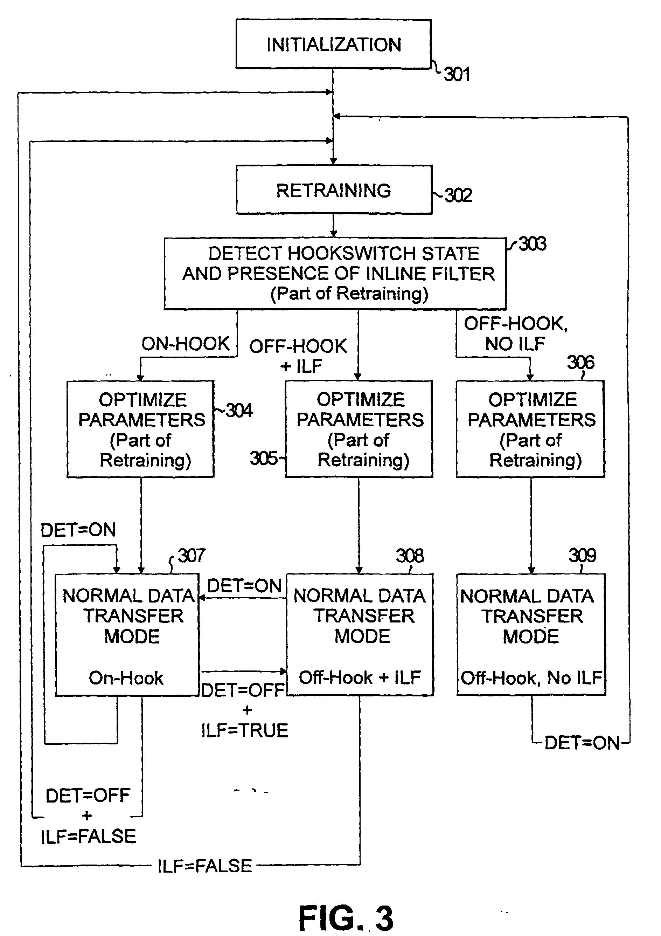

FIG. 3 is a flow diagram illustrating a process for controlling retraining or adaptive attenuation according to one embodiment of the invention. The process begins at step 301 and relies on two main inputs: "Det" and "ILF". "Det" (off hook DETector) is the output of the off hook detector referred previously as 117 or 203. "Det=on" means that the off hook detector has detected an on hook state and "Det=off" means that the off hook detector has detected an off hook state. The "ILF" (In Line Filter) indication is an internal indication based on measured vectors such as channel response, echo response, etc. "ILF=true" means that an inline filter was detected. "ILF=false" means that an inline filter was not detected, i.e., at least one of the phones that is currently off hook does not have the protection of an inline filter.

In step 302, a retrain process starts. It may be a full startup sequence or a reduced subset of this process usually known as fast retrain. In step 303, a decision is made as to the new hookswitch status. This status is a combination of the on/off hook state and the existence of inline filter in series with the off hook phone. The hookswitch information may be provided by off-hook detector 117 or off-hook detector 203, depending on the particular configuration being used. The existence of the inline filter may be found based on various indicators such as estimation of the channel response, echo channel, noise floor, etc. For example, if the echo response during off hook matches the echo response that was measured during on hook state, this indicates off-hook with ILF in place. From step 303, the process continues to steps 304, 305, or 306, depending on the off-hook/on-hook state and the presence or absence of an ILF. If an on-hook state is detected, the process proceeds to step 304. If an off-hook state is detected and an ILF is present, the process proceeds to step 305. If an off-hook state is detected and an ILF is not present, the process proceeds to step 306.

In steps 304, 305, and 306, optimization occurs. This optimization is fully carried out during installation. A subset of it will be performed during full startup and a smaller subset will be performed during fast retrain. The optimization function optimizes the following parameters: transmit power, data rate, bit loading, and gains allocation. It should be noted that different optimization may be carried out as a function of a phone's state. Normal data transfer mode steps (i.e., states during which the modem is capable of receiving and transmitting user data) 307, 308, 309 follow the optimization phase. Step 307 follows step 304. Step 308 follows step 305. Step 309 follows step 306.

In steps 304, 305, 306, a decision is made as to whether or not power adjustment is needed. If the power level at which the data communications signals are being transmitted is too high, it is more likely to interfere with any telephone apparatus (on or off hook) that is also coupled to the DSL. If the power level is too low, it is more likely to cause errors in the data communications. Thus, if an adjustment of the power level is needed, the power level is adjusted in steps 304-306. If no adjustment of power level is needed or after a power adjustment is completed, the process continues to normal data transfer mode or state, steps 307-309.

Step 307 corresponds to a normal data transfer mode or state where all phones are on hook. If there has been no change in the hookswitch status, the process remains at this step. If, however, a change of hookswitch status has been observed, the process continues to step 302 or to step 308 according to the ILF state. If ILF=true, retraining will usually not be needed and step 308 follows. If ILF=false, the process moves to step 302 and retraining is performed. Retraining resets the modem parameters to conform to the actual conditions of the DSL using the reliable measurements available to the modem during the retraining procedure.

Step 308 corresponds to a normal data transfer mode state where an inline filter is installed on each of the off hook phones - at least one phone should be off hook in this step. Returning to on hook will be detected by the off hook detector 117 or 203. As a consequence, usually retraining will not be needed and the modem will return to step 307 without causing any service interruption. The ILF indication may change to false if another phone without ILF went off hook. In this case, retraining is needed and step 302 follows.

Step 309 corresponds to normal data transfer mode state where at least one phone went off hook and an inline filter is not installed on that off hook phone. Transition to on hook state in this step will cause retraining by returning to step 302.

It should be noted that transitions from normal data transfer mode states 307, 308, and 309 to retraining step 302 may also happen based on other parameters such as bit errors, low noise margin, rapid noise margin drop, loss of frame synchronization (LOF), etc. While off hook, these parameters may also serve as indicators for the existence of an ILF.

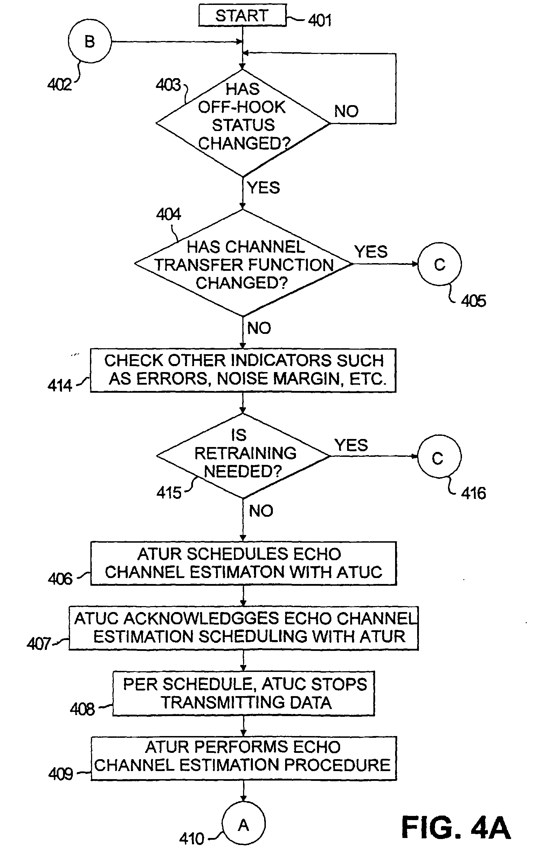

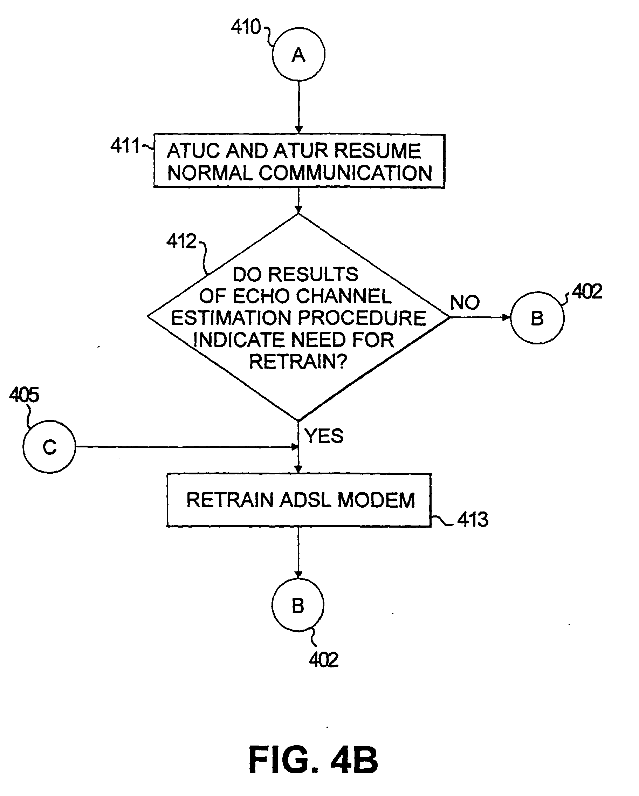

FIGS. 4A and 4B are a flow diagram related to a normal data transfer mode state when all phones are on hook. The figures illustrate a process for determining if retraining is needed and, if necessary, for performing retraining according to one embodiment of the invention. The process begins in step 401. In step 403, a decision is made as to whether or not the hookswitch status of any telephone instrument on the DSL has changed. If not, the process remains at step 403. If, however, a change in the hookswitch status has been detected, for example by off hook detector 117 or off-hook detector 203, the process continues to step 404. At step 404, a decision is made as to whether or not the channel transfer function has changed. The transfer function characterizes how the channel will respond to signals applied to it. If the channel transfer function has changed, the process continues to step 413 via reference 405, assuming an off hook state without an ILF. In step 413, modem retraining is performed to adapt the modems to the new transfer function. If, in step 404, the transfer function is determined not to have changed, the process continues to step 414. An off hook state with an ILF is more likely in this case.

In step 414, other indicators are accumulated. These indicators include, among others, the following: error indication, noise margin, loss of frame (LOF), etc. These indicators are checked in step 415. If, for example, the noise margin drops significantly, retraining is performed in step 416. If the indicators show a possibility of continued operation, echo channel estimation is needed to complete the picture and verify that retraining (and power cutback) are not needed.

If retraining is not needed, then the process continues to step 406. In step 406, the ADSL transceiver unit--remote side (ATUR) schedules echo channel estimation with the ADSL transceiver unit--CO side (ATUC). In step 407, the ATUC acknowledges echo channel estimation scheduling with the ATUR. In step 408, according to the agreed schedule, the ATUC stops transmitting data. In step 409, the ATUR performs an echo channel estimation procedure by transmitting a known signal and monitoring the DSL to see how it responds to the known signal. From step 409, the process continues to step 411 via reference 410. In step 411, the ATUC and ATUR resume normal communications. In step 412, a decision is made as to whether or not the results of the echo channel estimation procedure indicate a need for retraining. If not, the process returns to step 403 via reference 402. If so, retraining is performed in step 413, and the process returns to step 403 via reference 402.

It should be noted that only short service interruption is needed in order to allow echo channel estimation. The estimation information gained from the echo channel estimation process allows a reliable decision regarding the need for retraining to occur in a time period which is much shorter than the a fast retrain time.

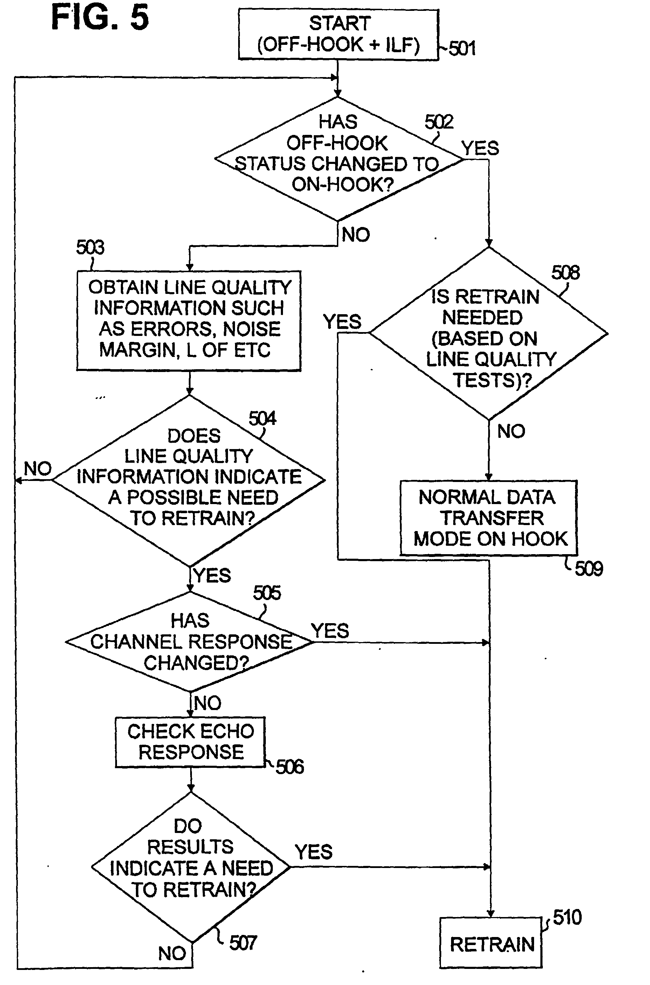

FIG. 5 is a flow diagram that relates to a normal data transfer mode state when only phones with inline filters are off hook, for example, as shown in step 308 of FIG. 3. FIG. 5 illustrates a process for determining if retraining is needed and, if necessary, performing retraining according to one embodiment of the invention. The process begins in step 501. In step 502, a decision is made as to whether or not the hookswitch status of any telephone instrument on the DSL has changed. If on hook state has been detected, the need for retrain is tested based on a number of indicators such as errors, noise margin, etc. At step 508, if those indicators show a need for retraining, step 510 follows. If retrain is not needed, step 509, which, for example, corresponds to step 307 of FIG. 3, follows.

Step 503 will follow if the hookswitch status remains off hook. In this case, an event of a new off hook phone without the inline protection must be detected. Again a number of indicators such as errors, noise margin, etc. are used to decide in step 504 if there is a possible need for retraining. These indicators are not very reliable, so step 504 is used as a pre-filter before more CPU-consuming activities are performed. In step 504, a decision is made as to whether or not the line quality information indicates a possible need to retrain. If so, the process proceeds to step 505. If not, the process returns to step 502.

At step 505, a decision is made as to whether or not the channel transfer function has changed. The transfer function characterizes how the channel will respond to signals applied to it. If the channel transfer function has changed, the process continues to step 510. In step 510, modem retraining is performed to adapt the modem to the new transfer function. If, in step 505, the transfer function is determined not to have changed, the process continues to step 506.

In step 506, echo channel estimation is needed to assure complete evaluation of the communications channel. In step 506, the modem performs an echo channel estimation process as described in FIG. 4, steps 406-409. In step 507, a decision is made as to whether or not the results of the echo channel estimation procedure indicate a need for retraining. If not, the process returns to step 502. If so, retraining is performed in step 510.

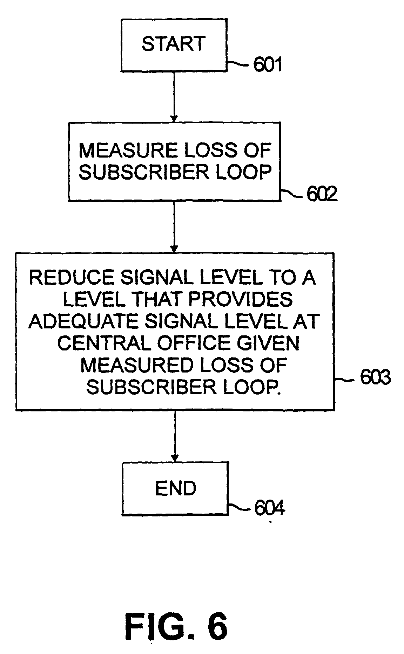

FIG. 6 is a flow diagram illustrating a process for adaptive setting of the transmit power according to one embodiment of the invention. The process begins in step 601. In step 602, a measurement is made of the signal attenuation associated with the subscriber loop. Alternatively, this information may be derived from parameters stored during the original modem training routine or the most recent retraining routine.

In step 603, an amount of signal level reduction is calculated based on the loss measurement obtained in step 602, the present signal level being transmitted, and the known minimum signal level requirements. The signal level reduction is calculated to ensure that an adequate signal level reaches the ADSL modem at the opposite end of the DSL with a reasonable safety margin, but that the signal level is near the minimum acceptable signal level. By minimizing the signal level, interference from telephone instruments that results in distortion of the ADSL modem signals is avoided.

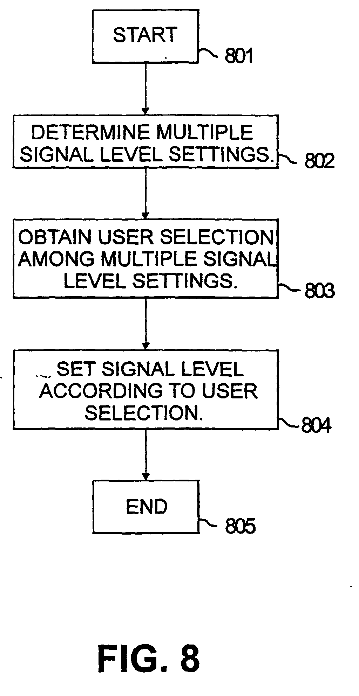

A set of transmit levels (for example, two or more) may be calculated based on the measured line attenuation. The modem will automatically select the transmit level among the calculated levels. The customer can change the default selection and choose an alternative transmit level to better optimize modem performance as described in reference to FIG. 8.

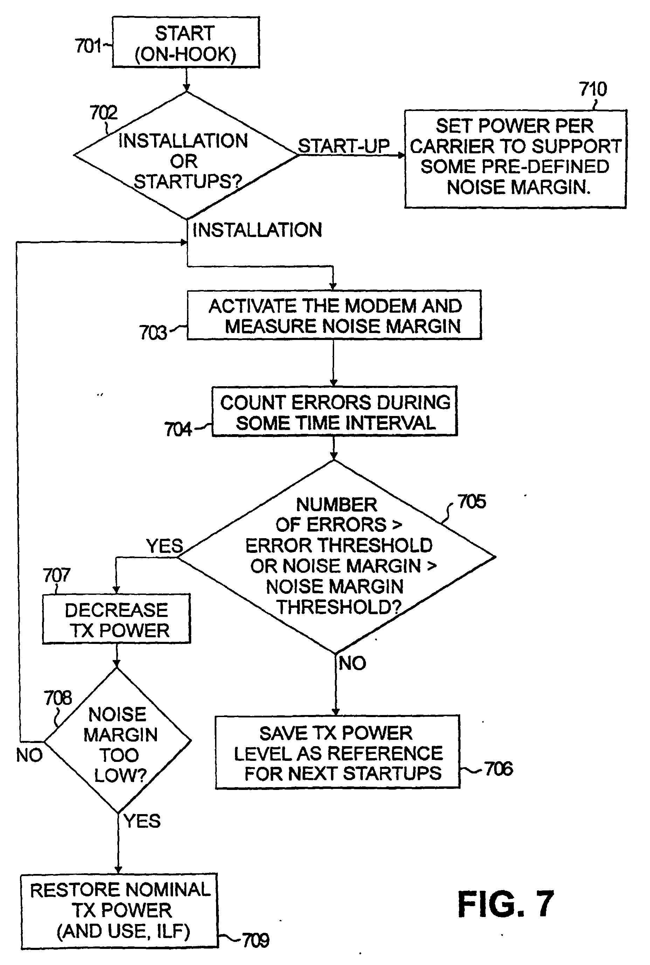

FIG. 7 is a flow diagram illustrating a process for adapting the transmit power during the on hook state. The process is activated if there is at least one phone which is not protected by an ILF. The figure relates to initial self calibration after first installation and to normal operation.

If the current operational phase is startup, step 710 follows 702. In step 710, during startup, the receiver allocates the minimal possible power per carrier that still allows operation with some pre defined data rate and some minimal pre-defined noise margin.

If the current state is "installation," step 703 follows. In step 703, the modem is activated and the noise margin is estimated. In step 704 (normal data transfer mode), the modem counts the number of errors during some pre-defined time period. In step 705, the number of errors and the estimated noise margin are compared to some pre-defined thresholds. If errors were not detected and the noise margin is below the threshold noise margin (i.e., not too high), the process ends in step 706. The transmit (Tx) power level is saved for fixture use.

The flow continues to step 707 if, at step 705, it is determined that the number of errors exceeds a predetermined error threshold or if the noise margin exceeds a predetermined noise margin threshold. Then, the transmit power is decreased at step 707. If the noise margin is too low (step 708), the process terminates at step 709. The nominal Tx power is then restored and the customer is provided with an indication that an ILF needs to be installed. If the noise margin is greater than a noise margin threshold, step 703 follows again.

FIG. 8 is a flow diagram illustrating a process for user-selected adaptive attenuation according to one embodiment of the invention. The process begins in step 801. In step 802, multiple signal level settings are determined. For example, one setting might be the lowest possible signal level setting given the loss of the DSL and the minimum required signal level for reliable reception. Other settings might be incrementally higher signal levels. Another alternative is to adjust signal levels based on the measured line attenuation as described in reference to FIG. 6 above.

In step 803, a user selection is obtained from among the multiple signal level settings. The user might choose the lowest signal level setting to minimize interference with telephone instruments or a somewhat higher level setting to reduce the likelihood of errors resulting from an insufficient signal-to-noise ratio. In step 804, a signal level is set according to the selection obtained from the user in step 803. In step 805, the process ends.

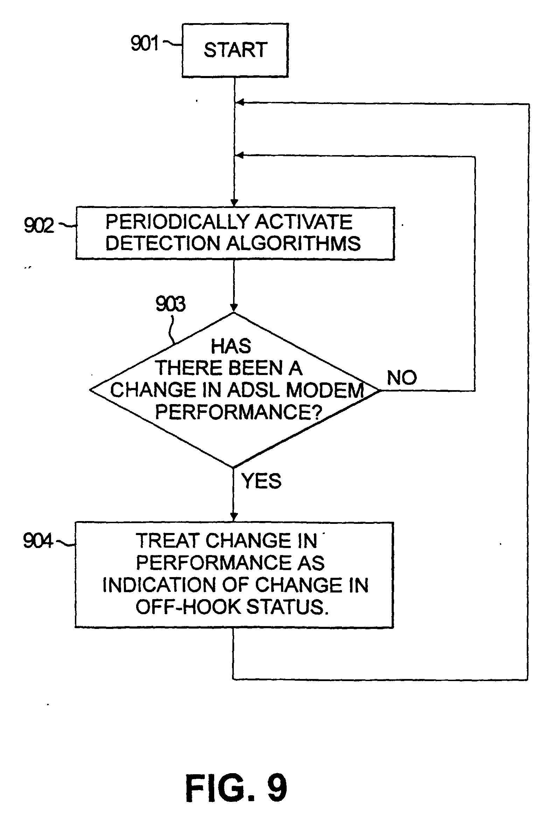

FIG. 9 is a flow diagram illustrating a process for detecting the state of a telephone hookswitch according to one embodiment of the invention. The process begins in step 901. In step 902, detection routines are periodically activated. These routines attempt to detect changes in ADSL modem operation, such as increased error rates, changes in the measured noise margin, channel response, etc. In step 903, a decision is made as to whether or not there has been a change in the ADSL modem parameters. If not, the process returns to step 902. If changes of sufficient magnitude that are sufficiently correlated with one another are detected, the determination is made that there has been a substantial change in ADSL modem performance. In the event of a change in ADSL modem performance, the process continues at step 904. At step 904, the change in ADSL modem performance is treated as an indication of a change in the hookswitch status of telephone instruments coupled to the DSL. This process is useful when an off-hook detector is not provided, but may also be used in conjunction with an off-hook detector.

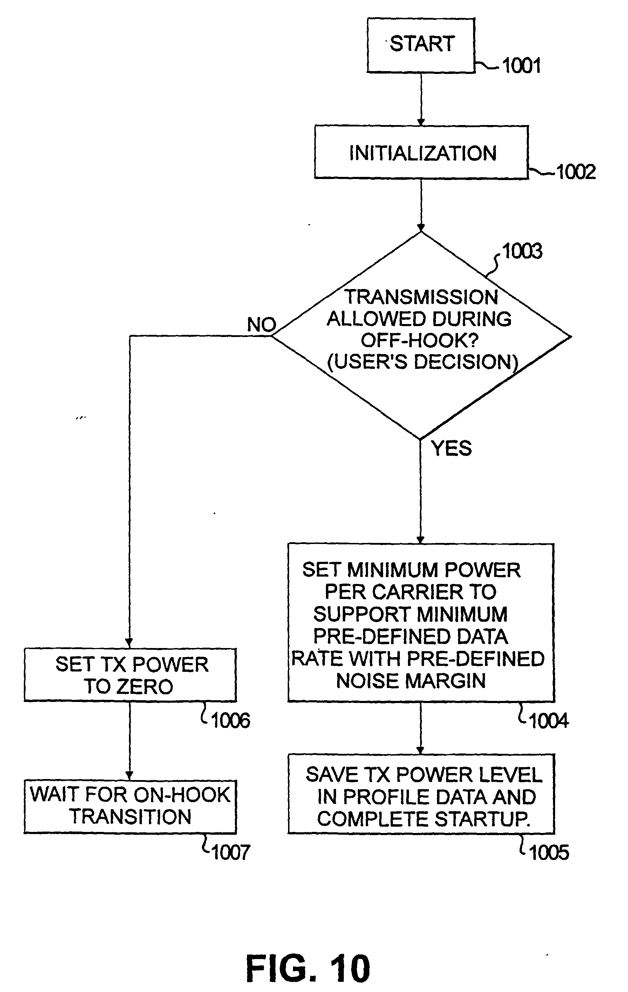

FIG. 10 is a flow diagram illustrating a process for setting the transmit power during the off hook state when an ILF is not installed. The process begins in step 1001. The modem is initialized in step 1002. In step 1003, the off hook setup is tested. Normally, transmission will be allowed during off hook, so step 1004 will follow. In step 1004, the modem optimizes its Tx level to the lowest possible power per carrier that still supports some minimal pre-defined data rate with some pre-defined minimal noise margin. This Tx level is stored in step 1005 as part of the profile data saved for the next fast retrain.

The user is provided with two possibilities. If the selected Tx power is low enough so that no significant disturbance is caused to POTS, then transmission during off hook is possible. If disturbance to POTS is present, then transmission is disabled during off hook and the process moves to step 1006. In step 1006, the Tx power is set to zero. In step 1007, the modem waits until an on hook state is detected. Following this on hook detection, a new startup process will begin.

## Claims

1. A method for improving performance of a digital subscriber line comprising:
determining a status of a telephone hookswitch;
determining whether retraining is indicated; and
determining whether power level adjustment is indicated.

2. The method of claim 1 further comprising:
initiating a retraining routine; and
adjusting a power level.

3. The method of claim 2 wherein said step of determining whether said retraining is indicated occurs in response to said step of determining said status of said telephone hookswitch.

4. The method of claim 3 wherein said step of determining said status of said telephone hookswitch further comprises determining whether said status of said telephone hookswitch has changed.

5. The method of claim 3 further comprising the steps of:
determining whether a different modem configuration profile is appropriate; and
selecting said different modem configuration profile.

6. The method of claim 1 further comprising:
determining whether an inline filter is installed.

7. The method of claim 6 wherein said step of determining whether said inline filter is installed occurs when said status of said telephone hookswitch is off hook.

8. The method of claim 6 further comprising:
initiating a retraining routine; and
adjusting a power level.

9. The method of claim 8 wherein said step of determining whether said retraining is indicated occurs in response to said step of determining whether said inline filter is installed.

10. The method of claim 9 further comprising the steps of:
determining whether a different modem configuration profile is appropriate; and
selecting said different modem configuration profile.

11. A method for determining whether modem retraining is indicated comprising:
determining a status of a telephone hookswitch; and
performing an echo channel measurement procedure.

12. The method of claim 11 further comprising:
determining a channel transfer function.

13. The method of claim 12 wherein said step of determining said status of said telephone hookswitch further comprises:
determining whether said status of said telephone hookswitch has changed, and
wherein said step of determining said channel transfer function further comprises:
determining whether said channel transfer function has changed.

14. The method of claim 11 wherein said step of performing said echo channel measurement procedure further comprises:
scheduling a time frame for performing said echo channel measurement procedure;
acknowledging said step of scheduling;
discontinuing transmission of data by a first modem;
initiating transmission of an echo testing signal by a second modem; and
performing a measurement of said echo testing signal.

15. The method of claim 14 further comprising:
determining whether said measurement of said echo testing signal indicates a need for retraining.

16. The method of claim 14 further comprising:
said first modem and said second modem resuming normal communication after said step of performing measurement of said echo testing signal.

17. A method for determining whether retraining is indicated comprising:
obtaining line quality information comprising a hookswitch status, a channel transfer function, and an echo measurement; and
determining whether said line quality information indicates retraining is needed.

18. The method of claim 17 wherein said step of obtaining line quality information further comprises obtaining an error rate, a noise margin, and a change in noise margin.

19. A method for reducing distortion on a digital subscriber line comprising:
performing a channel loss measurement on said digital subscriber line;
determining a minimum required signal level; and
adjusting a signal level on said digital subscriber line to remain above said minimum required signal level.

20. The method of claim 19 wherein said step of adjusting said signal level occurs in response to a telephone hookswitch changing from being in an on-hook state to being in an off-hook state.

21. The method of claim 19 wherein said step of adjusting said signal level occurs according to a user selection from among multiple signal level settings.

22. A method for estimating telephone hookswitch status comprising:
periodically initiating detection routines;
determining whether a change in modem performance has occurred; and
characterizing said change in modem performance as an indication of change in said telephone hookswitch status.

23. A method for controlling a modem comprising the steps of:
detecting a hookswitch state and a presence of an inline filter; and
optimizing modem parameters based on said hookswitch state and said presence of said inline filter.

24. The method of claim 23 further comprising the step of:
retraining said modem.

25. The method of claim 24 further comprising the step of:
initializing said modem.

26. A method for determining a need for retraining a modem comprising the steps of:
determining a hookswitch state;
obtaining line quality information;
determining if said line quality information suggests a need for retraining;
determining if a channel response has changed; and
checking an echo response.

27. A method for controlling a transmit power level of a modem comprising the steps of:
measuring a noise margin;
counting errors during a time interval; and
decreasing said transmit power level.

28. A method for controlling a modem transmission while telephone equipment is in an off hook state comprising the steps of:
determining if said modem transmission is allowed during said off hook state;
setting a minimum power per carrier to support a minimum pre-defined data rate with a minimum pre-defined noise margin.

29. The method of claim 28 further comprising the steps of:
setting a power level for said modem transmission to zero; and
waiting for an on-hook transition.

30. The method of claim 29 further comprising the step of:
saving said minimum power per carrier in a storage memory.

31. The method of claim 30 further comprising the step of:
initializing a modem.

32. The method of claim 28 wherein said step of determining if said modem transmission is allowed during said off-hook state further comprises the step of:
receiving a user indication as to whether said modem transmission is allowed during said off-hook state.
